# FASCICULE DE BREVET EUROPEEN

(11) **EP 3 465 035 B1**
(45) Date de publication et mention de la délivrance du brevet: **13.05.2020**
(21) Numéro de dépôt: 17716957.0
(22) Date de dépôt: 20.03.2017
(51) Int. Cl.: F25J 3/02

(54) **PROCÉDÉ DE SÉPARATION CRYOGÉNIQUE D'UN DÉBIT D'ALIMENTATION CONTENANT DU MÉTHANE ET DES GAZ DE L'AIR ET INSTALLATION POUR LA PRODUCTION DE BIO MÉTHANE PAR ÉPURATION DE BIOGAZ ISSUS D'INSTALLATIONS DE STOCKAGE DE DÉCHETS NON-DANGEREUX (ISDND) METTANT EN OEUVRE LEDIT PROCÉDÉ**
VERFAHREN ZUR KRYOGENEN TRENNUNG EINES METHAN- UND LUFTGASHALTIGEN EINSATZSTROMS, ANLAGE ZUR HERSTELLUNG VON BIOMETHAN DURCH REINIGUNG VON BIOGASEN AUS NICHT-GEFÄHRLICHEN ABFALLBEHÄLTERN (NHWSF) ZUR DURCHFÜHRUNG DES VERFAHRENS
PROCESS FOR CRYOGENIC SEPARATION OF A FEED STREAM CONTAINING METHANE AND AIR GASES, FACILITY FOR PRODUCING BIOMETHANE BY PURIFICATION OF BIOGASES DERIVED FROM NON-HAZARDOUS WASTE STORAGE FACILITIES (NHWSF) IMPLEMENTING THE PROCESS

(30) Priorité: 27.05.2016 FR 1654798
(43) Date de publication de la demande: 10.04.2019
(73) Titulaire: Waga Energy, 38240 Meylan (FR)
(72) Inventeur: PRINCE, Guénaël, 38120 Saint Egreve (FR); PAGET, Nicolas, 38400 Saint Martin d'Heres (FR); LEHMAN, Jean-Yves, 75003 Paris (FR)
(74) Mandataire: Cabinet Laurent & Charras
(86) Numéro de dépôt international: PCT/FR2017/050651
(87) Numéro de publication internationale: WO 2017/203112

(56) Documents cités:
- DE-C- 951 875
- FR-A1- 2 917 489
- FR-A1- 2 971 331
- FR-A1- 2 971 332
- GB-A- 1 482 196
- US-A- 2 519 955

## Description

La présente invention concerne un procédé et appareil de séparation cryogénique d'un débit contenant du méthane, du dioxyde de carbone, de l'azote et/ou de l'oxygène et plus généralement des gaz de l'air, pour produire un débit enrichi en méthane.

Le procédé de l'invention trouve une application particulièrement avantageuse dans le cadre de la production de bio méthane par épuration de biogaz issu d'installations de stockage de déchets non-dangereux (ISDND).

Le biogaz est un gaz produit par un processus biologique de dégradation de la matière organique en milieu anaérobie, qui se compose principalement de méthane, de dioxyde de carbone, de vapeur d'eau et d'impuretés en quantités variables selon la matière organique ayant produit le biogaz. Les impuretés que l'on retrouve principalement sont le sulfure d'hydrogène, et lorsque la matière organique provient de déchets ménagers ou industriels, des composés organiques volatiles (COV).

Le biogaz peut être produit dans des réacteurs dédiés (autrement appelés « digesteurs ») où s'opère la réaction biologique, en milieu parfaitement anaérobie et avec une température contrôlée. Il peut aussi être produit naturellement et en quantités importantes dans les installations de stockage de déchets non dangereux (ISDND), dans lesquelles les déchets ménagers sont stockés dans des alvéoles, recouvertes d'une membrane lorsque celles-ci sont pleines. Avec la fermeture de l'alvéole, peut débuter le processus de méthanisation de la matière organique. Le biogaz ainsi produit est ensuite prélevé par aspiration dans un surpresseur via des tuyaux de collecte introduits dans les alvéoles, créant ainsi une légère dépression dans lesdites alvéoles. Celles-ci n'étant pas parfaitement étanches, de l'air est aspiré et se retrouve dans le biogaz en proportion variable. Pour cette source de gaz, les gaz de l'air s'ajoutent donc aux impuretés précédemment citées et doivent être enlevées pour valoriser le biogaz.

Il existe aussi d'autres sources de gaz contenant du méthane, du dioxyde de carbone, des impuretés et une teneur variable en gaz de l'air, comme le gaz de mines, produit par dégazage des couches de charbon dans des mines abandonnées, et se mélangeant à l'air présent dans les vides miniers. Dans l'objectif de valoriser ce gaz pour les applications mentionnées plus haut, les impuretés qu'il contient doivent être éliminées.

Plus précisément, afin de produire un débit enrichi en méthane, il est nécessaire d'enlever les impuretés que sont le dioxyde de carbone, l'azote et l'oxygène, à un niveau tel que le débit enrichi en méthane ainsi produit puisse être valorisé sous forme de gaz naturel, de gaz naturel liquéfié, ou de carburant véhicule. Selon les utilisations mentionnées, le niveau d'impureté requis peut varier. Néanmoins, une cible typique pour ces impuretés dans le débit enrichi en méthane est : moins de 2% molaire de dioxyde de carbone, moins de 1% d'oxygène, et moins de 1% d'azote. Lorsque le débit enrichi en méthane ne contient plus de dioxyde de carbone, le niveau d'impureté requis est : moins de 2,5% molaire d'azote, et moins de 1% d'oxygène.

Les compositions dans la suite de la demande sont exprimées en pourcentages molaires.

Dans le cas de biogaz produit par ISDND, un premier traitement est nécessaire pour enlever la majeure partie du dioxyde de carbone et les impuretés. De nombreux procédés existent pour cela, comme l'utilisation de membranes de perméation gazeuses associée à un traitement des impuretés par adsorption (US-2004-0103782), l'utilisation de procédés par adsorption modulée en pression, l'utilisation de colonnes de lavage à l'eau ou aux amines, l'utilisation de procédés de cryotrapping. Ces procédés permettent d'abattre les impuretés du biogaz et la majeure partie du dioxyde de carbone, mais ne permettent pas de séparer les gaz de l'air du débit de gaz enrichi en méthane. Une étape de traitement supplémentaire est donc requise.

Cette étape de traitement supplémentaire peut consister en une adsorption modulée en pression, avec l'utilisation d'adsorbants spécifiques sélectifs à l'azote puis à l'oxygène (US 8,221,524). Cependant, l'atteinte d'une teneur très basse en oxygène et en azote se fait au détriment du taux de récupération du méthane du procédé, qui ne le rend pas intéressant économiquement.

Une autre solution pour enlever les gaz de l'air du méthane est la distillation cryogénique, qui permet d'avoir un bon pouvoir séparateur entre le méthane d'une part, récupéré en cuve de colonne et l'oxygène et l'azote d'autre part, récupérés en tête de colonne, grâce aux différences de volatilité entre ces composants.

Cependant, la présence d'oxygène, dont la volatilité est comprise entre celle du méthane et celle de l'azote, conduit à ce que ce composé tend à se concentrer dans la zone de distillation, et ce, même pour de faibles teneurs en oxygène dans la charge de la colonne. L'augmentation de la concentration en oxygène dans la phase vapeur, ajoutée à la diminution de la concentration de méthane dans la phase vapeur, peut conduire à un mélange de vapeur qui est, de par ses compositions, explosif.

Le principe de la distillation aux températures cryogéniques d'un mélange de méthane et de gaz de l'air est connu, ainsi que l'apparition de mélanges de vapeurs potentiellement explosives au sein de la colonne. Ainsi, le document DE 951 875 propose de régler la distillation de telle manière à ce que le gaz sortant en tête de colonne soit en dehors de la limite supérieure d'explosivité (LSE). Cependant, il n'est pas fait mention de la concentration naturelle de l'oxygène dans la colonne de distillation, et ce procédé ne permet donc pas d'éviter la formation d'un mélange de gaz explosif.

Le document FR 1410494 identifie ainsi le risque de formation de ce mélange explosif, et propose un moyen d'éviter l'inflammation du mélange, en disposant entre les plateaux de la colonne de distillation une mousse métallique permettant de dissiper la chaleur de réaction de l'oxydation du méthane, et donc d'éviter une explosion. Cependant, le moyen proposé n'évite pas la réaction d'oxydation du méthane, qui produira du dioxyde de carbone et de l'eau, composés indésirables car susceptibles de boucher la colonne aux températures cryogéniques.

Le document US 3,989,478 propose de régler la distillation de telle manière que le gaz sortant en tête de colonne contienne au moins 20% de méthane, de telle sorte que les compositions des phases vapeurs dans la zone de distillation ne soient pas explosives. L'inconvénient d'un tel réglage est d'une part que si le gaz en tête de colonne contient 20% de méthane, et le reste en air, alors il est extrêmement proche de l'explosivité. D'autre part, la perte en méthane dans le gaz de tête est importante. Enfin, il n'est pas fait mention de la concentration naturelle de l'oxygène dans la colonne de distillation, et ce procédé ne permet donc pas d'éviter la formation d'un mélange de gaz explosif.

Une autre solution serait de diluer les mélanges gazeux et/ou liquides de la colonne de distillation, de façon à ce qu'aux endroits présentant un enrichissement de la teneur en oxygène, cette teneur soit ramenée à une valeur rendant le mélange non explosif.

Ainsi le document FR 2,971,331 propose une dilution par pompage de méthane liquide en cuve de colonne de distillation et sa réinjection en tête de colonne. Le moyen proposé, bien qu'évitant la formation d'un mélange explosif dans la colonne, conduit à augmenter les inventaires de méthane liquide dans la colonne, et donc l'énergie stockée, ce qui n'est pas souhaitable du point de vue de la sécurité du procédé. Il faut d'autre part intégrer une pompe de méthane liquide, source de fuites potentiellement dangereuses.

Le document FR 2,971,332 propose d'éviter la formation d'un mélange explosif au sein de la colonne par dilution à l'azote prélevé dans une source extérieure. Il est donc nécessaire d'utiliser un fluide qui a un coût, l'azote, pour réaliser la dilution, ce qui augmente les coûts opératoires du procédé. Il est à noter que dans ce document, le méthane à l'état vapeur injecté en cuve de colonne est un débit combustible issu du condenseur-rebouilleur. Il est exclusivement utilisé en tant que phase vapeur montante dans le cadre de la distillation du débit d'alimentation. En l'absence d'un tel débit, il n'y a pas de distillation possible.

Le document US2519955 décrit un procédé de production d'un mélange de méthane et d'oxygène. Au contraire de la présente invention, l'idée n'est pas de séparer le méthane de l'oxygène pour diminuer le risque d'explosivité mais au contraire de les associer. Pour l'essentiel, le procédé consiste à détendre un débit de gaz naturel riche en méthane mais dépourvu d'oxygène puis à récupérer la chaleur produite au sein d'un échangeur agencé dans une colonne de distillation. Au sein de l'échangeur, une partie du débit d'alimentation composée du méthane liquide est réinjectée en cuve de colonne tandis que l'autre partie composée d'azote est réinjectée en tête de colonne à un niveau supérieur à celui du débit d'alimentation. Le débit d'azote n'est donc pas utilisé comme débit de dilution mais sert à limiter la perte en méthane en occupant le volume en tête de colonne.

Le problème que se propose de résoudre l'invention est celui de mettre au point un procédé de séparation cryogénique d'un mélange dont les concentrations soient toujours en-dehors de la zone d'explosivité, et qui ne présente pas les inconvénients ci-dessus évoqués.

Par ailleurs, pour pouvoir effectuer la séparation de l'O₂ et du N₂ par rapport au CH₄ par distillation cryogénique, il est nécessaire de disposer d'un débit dont la teneur en CO₂ soit particulièrement basse. La valeur communément admise est de 50 ppmv - parties par million volumiques - de dioxyde de carbone maximum pour éviter la formation de cristaux qui boucheraient les échangeurs cryogéniques. De même, l'eau doit être éliminée pour éviter le gel.

Pour résoudre ce problème, on a proposé dans le document FR 2,917,489 de régénérer les adsorbants utilisés dans les adsorbeurs modulés en température ou en pression au moyen du gaz enrichi en méthane, prélevé en fond de colonne de distillation à l'état liquide et ensuite vaporisé. L'inconvénient de l'utilisation de ce fluide de régénération réside dans la nécessité de contrôler la quantité de dioxyde de carbone en sortie du lit d'adsorbant à une valeur constante, en mélangeant le débit en sortie du lit avec un débit enrichi en méthane prélevé en amont du lit. Ce contrôle est rendu nécessaire car le débit enrichi en méthane et contenant une faible quantité de dioxyde de carbone issue de la régénération est destiné à être valorisé sous forme de biométhane. Or, en vue de l'injection dans un réseau de gaz naturel, il doit se conformer strictement aux prescriptions de l'opérateur de réseau en termes de qualité.

Le second problème que se propose de résoudre l'invention est donc celui de régénérer les adsorbants utilisés dans les adsorbeurs modulés en température ou en pression à partir d'un débit provenant de la séparation cryogénique sans entrainer les inconvénients précités.

Pour résoudre l'ensemble de ces problèmes, le Demandeur a mis au point un procédé de séparation cryogénique dans lequel le débit de dilution de l'O₂ contient essentiellement de l'azote et provient du débit d'alimentation et non d'une source externe. Il s'ensuit une baisse de coûts évidente.

Plus précisément, l'invention a pour objet un procédé de séparation cryogénique d'un débit d'alimentation contenant du méthane et des gaz de l'air selon la revendication 1.

En pratique, le débit d'alimentation contient de 60 à 97% de méthane, entre 3 et 50% d'azote et d'oxygène, et 3% ou moins de dioxyde de carbone.

Le Demandeur a mis en évidence que la détente préalable du débit d'alimentation de la colonne de distillation dans un ballon séparateur, puis l'injection de la phase vapeur comprenant essentiellement de l'azote, ainsi produite, dans la partie basse du garnissage de la colonne de distillation, c'est-à-dire en amont du flux de vapeur entrainait une dilution suffisante de l'oxygène vapeur, dont les concentrations, grâce à ce flux de balayage, sont suffisamment basses pour que le mélange avec le méthane ne soit pas inflammable. La fraction liquide du débit d'alimentation comprenant essentiellement du méthane liquide est quant à elle ensuite injectée en tête de la colonne à distiller.

Du fait de la séparation de la phase vapeur de la phase liquide du débit d'alimentation et de la réinjection de toute ou partie de cette phase vapeur, il n'est pas nécessaire d'utiliser de l'azote gazeux provenant d'une source extérieure comme fluide de balayage, de sorte que la consommation d'azote diminue.

Néanmoins, l'utilisation en tant que débit de dilution, d'un gaz provenant du débit même d'alimentation à traiter, que ce soit à l'issue de la détente du débit refroidi ou à l'issue d'une autre étape de traitement de celui-ci, n'exclut pas de le combiner avec un débit de dilution provenant d'une source externe. Les deux débits de dilution peuvent être injectés dans la colonne de distillation sous la forme d'un seul et même mélange ou de manière séparée.

En pratique, il est nécessaire de refroidir la tête de colonne pour condenser la vapeur montante riche en azote dans ladite tête de colonne et le cas échéant une partie de la vapeur provenant du débit d'alimentation du séparateur.

Dans un premier mode de réalisation, on refroidit la tête de colonne en refroidissant le débit d'alimentation issu de la détente en le mélangeant avec un fluide frigorigène. En d'autres termes, le débit de fluide frigorigène est utilisé comme source de froid pour la condensation de la vapeur en tête de colonne, et participe à l'effet de dilution de l'oxygène dans la colonne de distillation en assurant la condensation d'une partie seulement de la vapeur issue de la détente du débit d'alimentation, l'autre partie constituant le débit de dilution.

Dans un mode réalisation particulier, on refroidit le débit d'alimentation soit avant le séparateur en mélangeant ledit débit avec un fluide frigorigène, soit dans le séparateur en introduisant un fluide frigorigène, directement dans le séparateur.

Dans un second mode de réalisation, on refroidit la tête de colonne au moyen d'un fluide frigorigène, que l'on introduit directement en tête de colonne.

En pratique, le fluide frigorigène est de l'azote liquide.

Dans un mode de réalisation particulier, la colonne contient plusieurs tronçons de distillation et on introduit le débit de dilution entre deux tronçons.

En pratique, les tronçons de distillation se présentent sous la forme de garnissage ou de plateau de distillation. Dans tous les cas, les tronçons de distillation sont agencés pour que la phase liquide cède ses composés les plus volatiles à la phase vapeur et que la phase vapeur cède ses composés les moins volatiles à la phase liquide.
Comme déjà dit, le procédé de l'invention trouve une application particulièrement avantageuse dans le cadre de la production de biométhane par épuration de biogaz issu d'ISDND.

Pour pouvoir effectuer la séparation de l'O₂ et du N₂ par rapport au CH₄ par distillation cryogénique, il est nécessaire de disposer d'un débit dont la teneur en CO₂ soit particulièrement basse. La valeur communément admise est de 50 ppmv - parties par million volumiques - de dioxyde de carbone maximum pour éviter la formation de cristaux qui boucheraient les échangeurs cryogéniques. De même, l'eau doit être éliminée pour la même raison.

En d'autres termes et selon l'invention, préalablement à la séparation cryogénique, on fournit un débit d'alimentation riche en méthane et contenant de l'azote et de l'oxygène, dont on a préalablement réduit la teneur en CO₂.

Pour ce faire, on réduit la teneur en CO₂ en introduisant le débit d'alimentation riche en CO₂ dans au moins une unité d'épuration avantageusement par adsorption, par exemple modulé en pression (PSA) ou en température (PTSA) chargée en adsorbant aptes à adsorber réversiblement la majeure partir du CO₂.

Ce type d'épurateur est connu de l'homme de l'art. En pratique, on met en œuvre au moins 2 PSA ou PTSA en parallèle pour un fonctionnement continu, l'un étant en adsorption pour éliminer le dioxyde de carbone quand l'autre est en régénération, la régénération étant obtenue par abaissement de la pression, et par balayage d'un gaz préalablement chauffé pour apporter l'énergie requise pour la désorption.

Dans un premier mode de réalisation, on régénère les adsorbants utilisés dans les adsorbeurs au moyen du débit vapeur riche en oxygène et en azote soutiré en tête de colonne. En pratique, le débit appauvri en méthane soutiré en tête de colonne contient entre 60 et 100% d'azote et d'oxygène.

Il a en effet été trouvé que le gaz de tête de la colonne, appauvri en méthane, et contenant de plus l'azote vapeur injecté dans la colonne, avait un débit suffisant, du fait de l'injection d'azote, pour permettre durant le temps de régénération d'effectuer le cycle de chauffage et de refroidissement du tamis d'adsorbant, nécessaire à la désorption du dioxyde de carbone. Dans ce cas, il n'est plus nécessaire d'utiliser le débit en méthane soutiré en cuve de colonne pour régénérer les adsorbants et donc d'assurer une teneur en dioxyde de carbone constante dans le débit en sortie de lit. Il est ainsi possible de soutirer le débit enrichi en méthane sous forme liquide et de le valoriser comme gaz naturel liquéfié.

En pratique, le débit enrichi en méthane en cuve de colonne contient entre 95 et 100% de méthane.

Le gaz chargé en CO₂ issu de la régénération peut ensuite être utilisé de 2 manières différentes : soit on envoie le gaz chargé à un système de destruction par oxydation, soit, si la teneur en méthane est suffisante, on envoie le gaz chargé à un système à combustion pour la production d'électricité (micro turbine ou moteur de cogénération).

Dans un second mode de réalisation, on régénère les adsorbants utilisés dans les adsorbeurs au moyen du débit vapeur riche en méthane soutiré en cuve de colonne

L'invention a également pour objet une installation pour la production de bio méthane par épuration de biogaz issus d'installations de stockage de déchets non-dangereux (ISDND) mettant en œuvre le procédé ci-avant décrit conformément à la revendication 10.

L'installation selon l'invention optionnellement comprend en outre :
- des moyens pour soutirer de la cuve de la colonne un débit liquide enrichi en méthane pour l'envoyer dans le condenseur-rebouilleur et produire un débit vapeur enrichi en méthane ;
- des moyens pour renvoyer le débit vapeur enrichi en méthane dans la cuve de la colonne ;
- des moyens pour envoyer le débit enrichi en azote et en oxygène de la tête de colonne à l'échangeur de chaleur ;
- des moyens pour prélever le débit liquide enrichi en méthane en cuve de colonne et l'envoyer à l'échangeur de chaleur ;
- des moyens pour prélever le débit enrichi en azote et en oxygène réchauffé dans l'échangeur, ou le débit enrichi en méthane réchauffé dans l'échangeur, à l'unité d'épuration.

L'invention et les avantages qui en découlent ressortiront bien des exemples suivants, à l'appui des figures annexées.

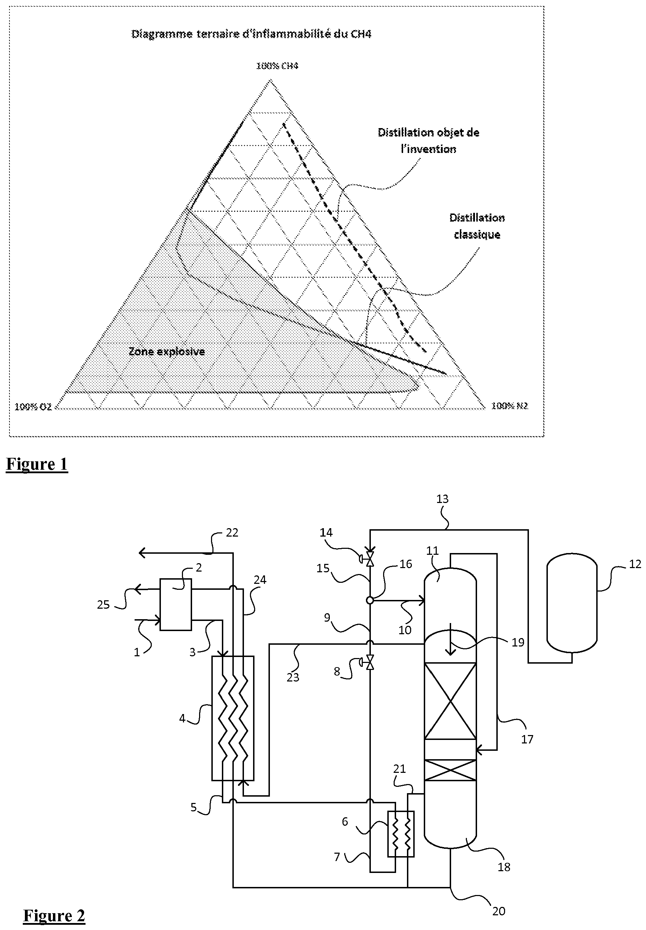

La figure 1 présente le diagramme d'explosivité d'un mélange méthane, oxygène et azote. Les figures 2 à 4 sont des schémas d'une unité de séparation cryogénique intégrée dans une installation de production de bio méthane par épuration de biogaz issu de stockage de déchets non-dangereux (ISDND) représentée partiellement. Les schémas diffèrent dans l'utilisation finale des débits après séparation cryogénique.

Sur la figure 1, on a représenté le diagramme d'explosivité d'un mélange méthane, oxygène et azote Dans ce diagramme, la zone d'explosivité est grisée. La composition de la phase vapeur sur toute la hauteur de la colonne est représentée en trait plein pour le cas où le ballon séparateur n'est pas installé ; la phase vapeur croise alors la zone d'explosivité. Dans le cas où un ballon séparateur de phases est installé, et que la phase gazeuse produite est utilisée pour balayer le garnissage, alors la phase vapeur montant dans la colonne n'est plus explosive.

Pour chacune des figures 2 à 4, un débit de gaz d'alimentation (1), à une pression comprise entre 5 et 15 bar absolu, comprenant entre 60 et 97% de méthane, entre 3 et 50% d'azote et d'oxygène, et 3% ou moins de dioxyde de carbone est introduit dans l'unité d'épuration par adsorption (2), avantageusement un PTSA afin d'abaisser la teneur en eau et en dioxyde de carbone à une valeur inférieure ou égale à 50 ppmv.

Le débit ainsi produit (3) est ensuite refroidi dans un échangeur de chaleur (4) par échange de chaleur avec le débit liquide enrichi en méthane (20), et le débit appauvri en méthane (23). Le débit refroidi (5) est envoyé dans un condenseur rebouilleur (6) où il est encore refroidi par échange de chaleur avec le liquide en fond de cuve, permettant au liquide de fond de cuve de bouillir et de générer la vapeur 21 riche en méthane qui servira à la distillation, et d'autre part de condenser le débit d'alimentation.

Le débit condensé (7) est ensuite détendu dans un organe de détente (8) à la pression opératoire de la colonne (18), comprise entre 1 et 5 bar absolu.

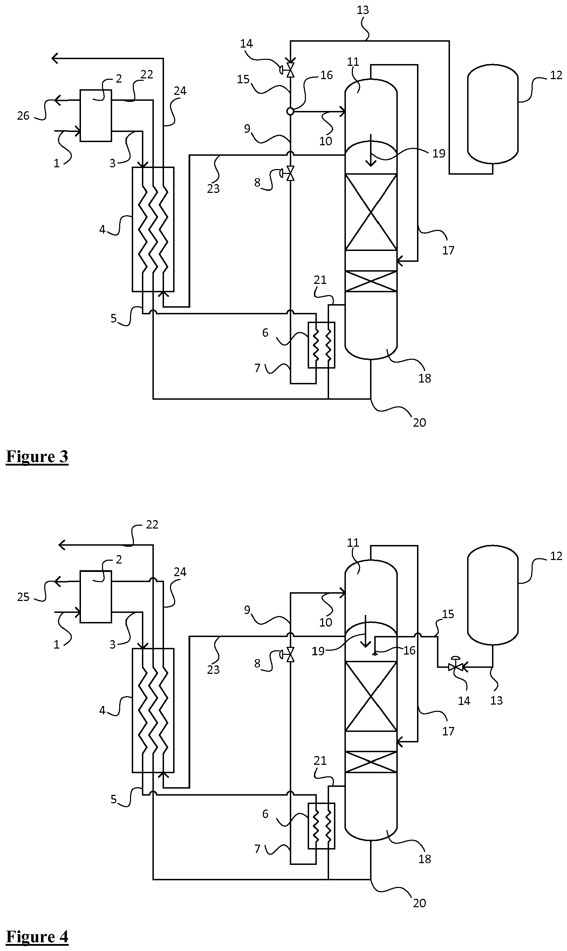

Selon les figures 2 et 3, un débit d'azote liquide (13) provenant d'un stockage d'azote liquide (12) est détendu dans un organe de détente (14) et le débit détendu (15) est mélangé au débit d'alimentation (9), au point 16, pour être ensuite introduit (débit 10) dans un ballon de séparation de phases liquide et vapeur (11). Dans un mode de réalisation non représenté, l'azote liquide est injecté directement dans le ballon séparateur.

Le mode de réalisation diffère de celui selon la figure 4, en ce que l'azote liquide est directement injecté dans la partie supérieure de la colonne de distillation, au moyen, par exemple, d'une buse d'injection (16').

Pour tous les modes de réalisation, la phase liquide (19) riche en azote liquide et provenant du ballon de séparation (11) est ensuite introduite dans la partie supérieure de la colonne de distillation (18). La phase vapeur (17) est introduite dans la partie inférieure du garnissage de la colonne de distillation (18), pour constituer le gaz de balayage et participer à la distillation.

La distillation produit ainsi deux débits : un débit enrichi en méthane (20), en cuve de colonne à distiller, et un débit appauvri en méthane (23) mais riche en O₂ et N₂ en tête de colonne à distiller.

Une fraction du débit liquide enrichi en méthane (20) est envoyée dans l'échangeur (4) pour être vaporisé et former un débit gazeux (22). Ce début gazeux peut être utilisé de deux manières.

Tel que représenté sur la figure 2, ce débit gazeux (22) est utilisé tel quel. Il est envoyé via une station d'injection dans un réseau de gaz naturel, ou vers une station de compression pour produire du gaz naturel comprimé, pour une utilisation en gaz naturel véhicule par exemple.

Tel que représenté sur la figure 3, ce débit gazeux (22) est utilisé pour régénérer l'unité d'épuration (2), et former un débit enrichi en méthane (26) contenant le dioxyde de carbone issu de la régénération de l'unité d'épuration. Le débit (26) est ensuite envoyé vers une station de compression pour produire du gaz naturel comprimé, pour une utilisation en gaz naturel véhicule par exemple.

Dans un mode de réalisation non représenté, le débit enrichi en méthane (20) est soutiré sous forme liquide et valorisé comme gaz naturel liquéfié.

Pour tous les modes de réalisation, l'autre fraction du débit liquide enrichi en méthane en fond de cuve de colonne est envoyée au condenseur rebouilleur (6), pour être vaporisée. Le débit vapeur ainsi créé (21) est envoyé à la colonne de distillation pour créer la vapeur montante participant à la distillation.

Le débit gazeux (23) contenant l'oxygène, l'azote et une fraction de méthane est ensuite envoyé à l'échangeur (4) pour être réchauffé.

Dans le mode de réalisation représenté sur la figure 2, le débit (24) sortant de l'échangeur est utilisé pour régénérer l'unité d'épuration (2) et produire le débit (25), qui est ensuite traité pour brûler le méthane résiduel dans un oxydateur.

Si la teneur en méthane est supérieure à 25%, le débit (25) peut être valorisé dans un moteur de cogénération ou une micro turbine, afin de produire de l'électricité.

Dans le mode de réalisation représenté sur la figure 3, le débit (24) est envoyé directement aux systèmes d'oxydation ou de valorisation du méthane mentionnés ci-avant.

## Revendications

1. Procédé de séparation cryogénique d'un débit d'alimentation contenant du méthane et des gaz de l'air comprenant de l'azote et de l'oxygène dans lequel :
- on refroidit (4) le débit d'alimentation (1) pour produire un débit refroidi,
- on condense (7) au moins partiellement le débit refroidi,
- on détend (8) le débit refroidi au moins partiellement condensé (7),
- on envoie au moins une partie du débit refroidi au moins partiellement condensé (7) à un niveau d'une colonne de distillation (18),
- on soutire de la colonne de distillation (18) un débit de cuve (20), le débit de cuve (20) étant enrichi en méthane par rapport au débit d'alimentation (1),
- on soutire de la colonne de distillation (18) un débit enrichi en oxygène et en azote (23) par rapport au débit d'alimentation,
- on introduit dans la colonne de distillation (18) au moins un débit de dilution (17) non combustible et plus volatil que l'oxygène à au moins un niveau inférieur à celui auquel est introduit le débit refroidi au moins partiellement condensé (7);
**caractérisé en ce qu'**on forme ledit au moins un débit de dilution (17) par séparation de la fraction vapeur produite à l'issue de la détente.

2. Procédé selon la revendication 1, **caractérisé en ce qu'**on refroidit la tête de colonne (18) en refroidissant le débit d'alimentation issu de la détente (9) en le mélangeant avec un fluide frigorigène (13).

3. Procédé selon l'une des revendications 1 ou 2, **caractérisé en ce qu'**on refroidit la tête de colonne (18) au moyen d'un fluide frigorigène (13), que l'on introduit directement en tête de colonne.

4. Procédé selon l'une des revendications 2 à 3, **caractérisé en ce que** le fluide frigorigène (13) est de l'azote liquide.

5. Procédé selon la revendication 1, **caractérisé en ce que** la colonne (18) contient plusieurs tronçons de distillation et on introduit la phase vapeur provenant du séparateur entre deux tronçons.

6. Procédé selon l'une des revendications précédentes, **caractérisé en ce qu'**on fournit un débit d'alimentation (3) riche en méthane et contenant de l'azote et de l'oxygène, dont on a préalablement réduit la teneur en CO₂.

7. Procédé selon la revendication 6, **caractérisé en ce qu'**on réduit la teneur en CO₂ en introduisant le débit d'alimentation riche en CO₂ dans au moins une unité d'épuration (2) avantageusement par adsorption chargée en adsorbant aptes à adsorber réversiblement la majeure partir du CO₂.

8. Procédé selon la revendication 7, **caractérisé en ce que** l'unité d'épuration (2) est une unité d'épuration par adsorption du type PSA ou PTSA et **en ce qu'**on régénère le PSA ou le PTSA au moyen d'un débit vapeur riche en oxygène et en azote (22) soutiré en tête de colonne (18).

9. Procédé selon la revendication 8, **caractérisé en ce que** l'unité d'épuration (2) est une unité d'épuration par adsorption du type PSA ou PTSA **en ce qu'**on régénère le PSA ou le PTSA au moyen d'un débit vapeur riche en méthane soutiré en cuve de colonne.

10. Installation pour la production de bio méthane par épuration de biogaz issus d'installations de stockage de déchets non-dangereux (ISDND) mettant en œuvre le procédé selon les revendications 1 à 9 et comprenant :
- une unité d'épuration (2) du dioxyde de carbone par adsorption apte à appauvrir le débit d'alimentation (1) en dioxyde de carbone ;
- un échangeur de chaleur (4) apte à refroidir le débit (3) appauvri en CO₂ ;
- une colonne de distillation (18);
- un condenseur-rebouilleur (6) apte à condenser le débit appauvri en CO₂ par échange de chaleur avec le liquide (20) soutiré en fond de cuve de la colonne de distillation (18),
- un moyen de détente (8) du débit condensé (7) ;
- un ballon séparateur (11) des phases liquide et vapeur du débit condensé ;
- des moyens connectés à une source de fluide frigorigène (12) pour envoyer un débit d'azote liquide (13) à un point de mélange (16) avec le débit d'alimentation (9), ou directement dans la partie supérieure de la colonne de distillation (18)
- une conduite apte à transporter la phase liquide (19) du ballon séparateur (11) à un niveau de la colonne de distillation (18) ;
- des moyens pour soutirer de la cuve de colonne de distillation un débit enrichi en méthane,
- des moyens pour soutirer de la tête de colonne de distillation (18) un débit (23) enrichi en azote et en oxygène,
**caractérisée en ce qu'**elle comprend en outre une conduite apte à transporter la phase vapeur (17) du ballon séparateur (11) dans la colonne (18) à au moins un niveau inférieur à celui auquel est introduite la phase liquide (19).

## Patentansprüche

1. Verfahren zur Tieftemperaturtrennung eines Versorgungsstroms, enthaltend Methan und Luftgase, die Stickstoff und Sauerstoff umfassen, wobei:
- der Versorgungsstrom (1) gekühlt wird (4), um einen gekühlten Strom zu erzeugen,
- der gekühlte Strom zumindest teilweise kondensiert wird (7),
- der gekühlte und zumindest teilweise kondensierte Strom (7) entspannt wird (8),
- zumindest ein Teil des gekühlten und zumindest teilweise kondensierten Stroms (7) auf einer Ebene einer Destillationskolonne (18) geleitet wird,
- ein Sumpfstrom (20) aus der Destillationskolonne (18) abgezogen wird, wobei der Sumpfstrom (20) im Verhältnis zum Versorgungsstrom (1) mit Methan angereichert ist;
- ein im Verhältnis zum Versorgungsstrom mit Sauerstoff und Stickstoff angereicherter Strom (23) aus der Destillationskolonne (18) abgezogen wird,
- mindestens ein Verdünnungsstrom (17), der nicht brennbar und stärker flüchtig als Sauerstoff ist, in die Destillationskolonne (18) zumindest auf einer Ebene eingeleitet wird, die unter jener liegt, auf welcher der gekühlte und zumindest teilweise kondensierte Strom (7) eingeleitet wird;
**dadurch gekennzeichnet, dass** dieser mindestens eine Verdünnungsstrom (17) durch Trennung der am Ende der Entspannung erzeugten Dampffraktion gebildet wird.

2. Verfahren gemäß Anspruch 1, **dadurch gekennzeichnet, dass** der Kopf der Kolonne (18) gekühlt wird, indem derVersorgungsstrom nach der Entspannung (9) gekühlt in dem er mit einem Kältemittel (13) vermischt wird.

3. Verfahren gemäß einem der Ansprüche 1 oder 2, **dadurch gekennzeichnet, dass** der Kopf der Kolonne (18) mittels eines Kältemittels (13) gekühlt wird, das direkt am Kopf der Kolonne eingeleitet wird.

4. Verfahren gemäß einem der Ansprüche 2 bis 3, **dadurch gekennzeichnet, dass** das Kältemittel (13) flüssiger Stickstoff ist.

5. Verfahren gemäß Anspruch 1, **dadurch gekennzeichnet, dass** die Kolonne (18) mehrere Destillationsabschnitte enthält und die aus dem Abscheider stammende Dampfphase zwischen zwei Abschnitten eingeleitet wird.

6. Verfahren gemäß einem der vorhergehenden Ansprüche, **dadurch gekennzeichnet, dass** ein methanreicher Versorgungsstrom (3) bereitgestellt wird, der Stickstoff und Sauerstoff enthält und dessen CO₂-Gehalt zuvor verringert wurde.

7. Verfahren gemäß Anspruch 6, **dadurch gekennzeichnet, dass** der CO₂-Gehalt verringert wird, indem der CO₂-reiche Versorgungsstrom in mindestens eine Einheit zur Reinigung (2) vorteilhafterweise durch Adsorption eingeleitet wird, die mit Adsorptionsmittel beladen ist, das dazu geeignet ist, das CO₂ zum größten Teil reversibel zu adsorbieren.

8. Verfahren gemäß Anspruch 7, **dadurch gekennzeichnet, dass** die Reinigungseinheit (2) eine Einheit zur Reinigung durch Adsorption vom PSA- oder PTSA-Typ ist und dass die PSA oder PTSA mittels eines am Kopf der Kolonne (18) abgezogenen sauerstoff- und stickstoffreichen Dampfstroms (22) regeneriert wird.

9. Verfahren gemäß Anspruch 8, **dadurch gekennzeichnet, dass** die Reinigungseinheit (2) eine Einheit zur Reinigung durch Adsorption vom PSA- oder PTSA-Typ ist und dass die PSA oder PTSA mittels eines im Säulensumpf abgezogenen methanreichen Dampfstroms regeneriert wird.

10. Anlage zur Herstellung von Biomethan durch Reinigung von aus Anlagen zur Lagerung ungefährlicher Abfälle (ISDND) stammendem Biogas, bei der das Verfahren gemäß den Ansprüchen 1 bis 9 angewendet wird und die Folgendes umfasst:
- eine Reinigungseinheit (2) für Kohlendioxid durch Adsorption, die geeignet ist, den Versorgungsstrom (1) von Kohlendioxid abzureichern;
- einen Wärmetauscher (4), der geeignet ist, den CO₂-abgereicherten Strom (3) zu kühlen;
- eine Destillationskolonne (18);
- einen Kondensator-Verdampfer (6), der geeignet ist, den CO₂-abgereicherten Strom durch Wärmeaustausch mit der am Boden des Sumpfes der Destillationskolonne (18) abgezogenen Flüssigkeit (20) zu kondensieren;
- ein Mittel zur Entspannung (8) des kondensierten Stroms (7);
- einen Abscheiderkolben (11) für die Flüssig- und Dampfphasen des kondensierten Stroms;
- Mittel, die mit einer Quelle von Kältemittel (12) verbunden sind, um einen Strom von flüssigem Stickstoff (13) zu einem Mischpunkt (16) mit dem Versorgungsstrom (9) oder direkt in den oberen Teil der Destillationskolonne (18) zu leiten;
- eine Leitung, die geeignet ist, die Flüssigphase (19) des Abscheiderkolbens (11) zu einer Ebene der Destillationskolonne (18) zu befördern;
- Mittel zum Abziehen eines mit Methan angereicherten Stroms aus dem Sumpf der Destillationskolonne,
- Mittel zum Abziehen eines mit Stickstoff und Sauerstoff angereicherten Stroms (23) aus dem Kopf der Destillationskolonne (18),
**dadurch gekennzeichnet, dass** sie ferner eine Leitung umfasst, die geeignet ist, die Dampfphase (17) vom Abscheiderkolben (11) in die Kolonne (18) zumindest auf einer Ebene zu befördern, die unter jener liegt, auf der die Flüssigphase (19) eingeleitet wird.

## Claims

1. A cryogenic separation process for a feed stream containing methane and air gases comprising nitrogen and oxygen wherein:
- the feed stream (1) is cooled down (4) to produce a cooled stream;
- the cooled-down feed stream is at least partially condensed (7);
- the at least partially condensed cooled-down feed stream (7) is at least partially decompressed (8);
- at least one portion of the at least partially condensed cooled-down stream (7) is sent to a level of a distillation column (18);
- a bottom stream (20) is drawn off from the distillation column (18), where the bottom stream (20) is enriched in methane compared to the feed stream (1);
- a stream enriched in oxygen and nitrogen (23) compared to the feed stream is drawn off from the distillation column (18);
- at least one dilution stream (17) that is non-combustible and more volatile than oxygen is added to the distillation column (18) at least one level below the level at which the cooled-down and partially condensed (7) stream is added, **characterized in that** said at least one dilution stream (17) is formed by separating the vapor fraction produced at the end of the decompression.

2. The process according to claim 1, **characterized in that** the column head (18) is cooled down by cooling down the feed stream obtained after the decompression (9) by mixing it with a refrigerant fluid (13).

3. The process according to one of claims 1 or 2, **characterized in that** the column head (18) is cooled down by means of a refrigerant fluid (13) added directly into the column head (18).

4. The process according to one of claims 2 to 3, **characterized in that** the refrigerant fluid (13) is liquid nitrogen.

5. The process according to claim 1, **characterized in that** the column (18) contains several distillation segments and the vapor phase coming from the separator is added between two segments.

6. The process according to one of the preceding claims, **characterized in that** a methane enriched feed stream (3) containing nitrogen and oxygen is provided and has a CO₂ concentration that was reduced beforehand.

7. The process according to claim 6, **characterized in that** the CO₂ concentration is reduced by adding the CO₂ enriched feed stream into at least one purification unit (2), preferably by adsorption loaded with adsorbent able to reversibly adsorb the majority of the CO₂.

8. The process according to claim 7, **characterized in that** purification unit (2) is a unit for purification by adsorption of the PSA or PTSA type and **in that** the PSA or PTSA is regenerated by means of the oxygen and nitrogen enriched gas stream (22) drawn from the column head (18).

9. The process according to claim 8, **characterized in that** purification unit (2) is a unit for purification by adsorption of the PSA or PTSA type **in that** the PSA or PTSA is regenerated by means of a methane enriched gas stream drawn from the column bottom.

10. A facility for producing biomethane by purifying biogas from non-hazardous waste storage facilities (NHWSF) implementing the method according to claims 1 to 9 and comprising:
- a unit for purification (2) of carbon dioxide by adsorption capable of depleting the feed stream (1) of carbon dioxide;
- a heat exchanger (4) capable of cooling the CO₂ depleted stream;
- a distillation column (18);
- a condenser-reboiler (6) capable of condensing the CO₂-depleted stream by heat exchange with the liquid (20) drawn off from the distillation column bottom (18);
- a means for decompression (8) of the condensed stream (7);
- a round bottom separator (11) for the liquid and gas phases from the condensed stream;
- means connected to a refrigerant fluid source (12) for sending a liquid nitrogen stream (13) to a point for mixing (16) with the feed stream (9), or directly into the distillation column head (18).
- a conduit able to transport the liquid phase (19) from the round-bottom separator (11) to a level of a distillation column (18);
- means for extracting from the column bottom a methane enriched stream;
- means for extracting from the distillation column head (18) a nitrogen and hydrogen enriched stream (23), **characterized in that** it comprises at least one conduit capable of transporting the vapor phase (17) of the round bottom separator (11) in the column (18) at, at least one level inferior to the one where the liquid phase (19) is introduced.
